# EUROPEAN PATENT APPLICATION

(11) **EP 4 067 314 A1**
(43) Date of publication of application: **05.10.2022**
(21) Application number: 20893023.0
(22) Date of filing: 27.11.2020
(51) Int. Cl.: C02F 11/12, C02F 103/14, B09B 3/00

(54) **PROCESS FOR RECYCLING WASTE FROM THE TREATMENT PLANTS OF INDUSTRIES THAT PRODUCE PIGMENTS, DYES, ANILINES AND COLOUR ENHANCERS, AND USE OF THE TREATED SLUDGE, SEDIMENT OR PETRY SLUDGE**

(30) Priority: 29.11.2019 BR 102019025255
(71) Applicant: Sparen Consultoria Ltda Me, 88960-000 Sombrio - SC (BR)
(72) Inventor: DOS SANTOS LUCIANO, Geisi, 89084-770 Indaial - SC (BR)
(74) Representative: Tiburzi, Andrea
(86) International application number: PCT/BR2020/050505
(87) International publication number: WO 2021/102548

(57) **Abstract**

This invention refers, in general, to the technological sector of recycling of aqueous chemical wastes that boost color in industrial processes, more specifically, to a recycling and reuse process for liquid, paste, or solid wastes obtained from wastes in its process of origin, commonly known as sludge from liquid wastes treatment plants, for its recycling back into the process in related industry sectors, boosting color, equalizing color in fibers and providing improvements in the processes where it is introduced.

## Description

### Technology Sector of the Invention

This refers to an invention covering a group of industries that are interrelated in such a way as to constitute a single inventive concept. The recycling and use of chemical wastes, which produce color in an aqueous medium and their wastes at any phase of its life cycle, which differs from the other references, as they originate at a water treatment plant, either biologically or physically and chemically, generating dregs, inks and paints, dispersions, pigments, dyes or anilines beyond their use-by dates, generated by production, beneficiation, processing or converting plants, such as: textiles, silk-screening, dyeing, and foods. More specifically, this refers to a process of recycling and reuse of liquid, paste, or solid wastes, obtained from industrial processes or water treatment stations normally known as wastes, solid wastes, Sludge, Dregs, or Petry sludge, for returning them to their state of conservation, for a new formulation or as a complement for paints, dyes, pigments, and inks for flexography, real estate agents, silk-screening, decorative, dispersions and color equalizers in fabrics and knits, such as cotton.

The wastes are obtained through the exploration of their use-by dates, contamination with wastes generated during handling in the course of their fabrication, or use in the production process. The so-called "dregs", obtained from excess dyes, dyes that do not fully react, and washing equipment used to produce inks and paints in development laboratories; or even the water used to wash printing cylinders or also from laundries, dry-cleaners and dye-shops, footwear fabrication, and foods, in addition to plants manufacturing or using color boosting products that, contaminating their liquid wastes treatment plants.

### Known State of the Art

Until recently, approximately 80% of dyes were returned to the flow through water treatment at the above-mentioned industries, the other 20% were chemical wastes that were not recycled, known as dregs, and simply stored alongside treatment stations or sent to landfills. Some projects are being worked on for recycling these drinks for use in civil construction. However, the amount used is only a small percentage compared to the daily output of these wastes.

These techniques cause operational problems, such as the need for storage space; commercial issues, such as high inventory and landfill costs; and environmental problems, such as the unpleasant smell of the wastes, which do not decompose. Instead, they turn into a spongy sludge after a few years that seeps out of the landfill after a few years, causing soil contamination and leaving it inoperable.

This situation changed with the advent of the BR 10 2017 014575 1 patent, held by the Applicant also submitting this Application. This addresses a wastes recycling process comprised of physical and chemical processes, with up to 30% of the formulation replaced by treated dregs, which could be the ink or paint itself was no additions. After introducing the additives, the product becomes a colorant for knits and in processes, substituting portions of the ink or paint formulation.

### Novelty, and Purposes of the Invention

The invention is an improvement of the project disclosed in the BR 10 2017 014575 1 patient. Its purpose is to expand the solution for color-generating wastes generated by any plant at different phases of the process and the useful life of the products, which constitutes the novel aspect of this proceeding, with the wastes coming from the liquid wastes treatment station, with biological or physical-chemical treatments for wastes such as inks and paints, dispersions, pigments or dyes that have aged out of the storage process, beyond their use-by dates or in a state of organic decomposition, extracted from wastes and eliminating the environmental aggression currently caused by their disposal through conventional processes in landfills. Wastes means Sludge, Dregs, or Petry Sludge, for example.

In the upgraded process described herein, up to 100% of used dye, preferably 0.01 % to 100%, is replaced by treated Sludge, Dregs, or Petry Sludge, which may be the actual color booster, such as a textile dye, paints, and inks in recovery processes, with the option of being a new product to be included, as it becomes a coloring agent after being added. It may be used as a color equalizer for cotton knits, replacing the process used today, for example.

### Detailed Description of the Invention

Wastes generating color in any plant and at different process stages and points during the useful life of products are the novel aspect of this process, with the wastes coming from the liquid wastes treatment station, with biological or physical-chemical treatments, paints, inks, dispersions, pigments or dyes aging out in storage, beyond their use-by dates, or in an organic composting station

The said waste recycling process described in this Specification and resulting from the treatment of water for the formulation of dyes, pigments, and dispersions, as addressed by this Specification, comprises a liquid wastes treatment and recovery station. For the purposes of this invention, the liquid wastes will be understood as generated during an industrial process, with the characteristic that the dye used in the fabric dyeing process, prints, and other sediments.

At the treatment and recovery station, chemical products are added to the liquid wastes, causing the particles and dye to settle on the bottom of the decantation vats. The treatment begins with the addition of chlorine to the water, speeding up the removal of organic matter and metals, followed by a pre-alkalinization step, with the addition of lime or soda to adjust the pH values; a coagulation phase, when aluminum sulfate, ferric chloride or some other coagulant is added, followed by stirring the water rapidly to cause electrical destabilization of the dirt particles, for faster clumping. After this procedure, a flocculation step is performed, mixed slowly into the water and resulting in the formation of flocs with the particles. A decantation step is then performed, with the water running into through large tanks to decant the dirt flocs formed in the flocculation stage, followed by a filtration step, with the water running through tanks with stone, sand, and charcoal beds that trap any dirt that slipped through the decantation phase. At the end of this process, the liquid wastes are obtained.

The generated wastes are channeled to drying boxes and, after drying these chemical wastes are sent to the process addressed by this invention, which upgrades them for return to ink and paint production. The processed wastes will be able to constitute up to 100% of the dye or color equalizer used.

The process described herein comprises the steps of:
- providing Sludge, Dregs, or Petry Sludge from the biological, chemical, or physical-chemical treatment of the said wastes, in liquid, paste, or solid form;
- drying the said Sludge, Dregs, or Petry Sludge; and
- introducing antimicrobial additives;

whereby the treated Sludge, Dregs, or Petry Sludge are used in full; and
wherein the treated Sludge, Dregs, or Petry Sludge are added to the formulation directly at the time of dyeing, used in its own production chain, or for further uses to be explored.

In a preferred embodiment, the said antimicrobial additives are any compound that results in the formation of formaldehyde during the process.

The dregs (wastes) are fully used, being added to the formulation directly at the time of dyeing. In other words, the dregs become one product to be added directly from drying (processing) to the dyeing plant, with no other alterations to the process, and no need for preparation as a dye, thus shortening times and eliminating risks of errors.

In an embodiment of this invention, the process further comprises the addition of a compound chosen from the selected group of silver nano-molecules, surfactants, wetting agents or mixtures thereof to the dregs after they have been dried and anti-microbial additives have been introduced.

In a preferred embodiment of the invention, the surfactants and/or wetting agents are tensioactive.

In an even more preferred embodiment of this invention, the 10 tensioactive surfactants and/or wetting agents are selected from the group comprising:
(a) cationics - such as ammonium quaternaries,
b) anionics - such as sodium dodecanoate; or
c) non-ionics - such as charge-free hydrophilic groups attached to fatty chain or amphoteric - N-alkyl and C-alkyl betaine and sultaine, as well as amino phosphatidyl alcohol, or the salts thereof.

These compounds turn the wastes into a product that will not lose its colorimetric characteristics before reuse.

In an alternative embodiment, the additional compound is not added, and the process is conducted in an acid medium, with a pH below 5, or in a base medium, with a pH above 8.5

As a color equalizer, it is fully used in the cotton purge state, meaning at 100%, preferably 0.01% to 100%, being able to replace the entire process, as a substitute for the current process that is very costly and highly pollutive, by a single dyeing stage with the dye resulting from our process.

In the textile industry, it is used as a dye as well as an additive that will help give color during dying stages, helping reduce the salt in the formulation, and also in the textile industry as a pigment during the printing process, used as a color embedding additive.

It is also used in the textile industry as a final dye for fibers and knits.

It is also used as a dye with microbial properties, which will allow better sales, use, and advantages of the dye presented after [comparing] the invention to the first-use dye.

This Specification describes an invention with Industrial Applicability, Novelty, and an Inventive Step, compliant with all the requirements defined by law for receiving the claimed privilege.

## Claims

1. Process for recycling wastes from treatment stations at plants producing pigments, dyes, anilines, and color boosters, **characterized in that** that it comprises:
- providing Sludge, Dregs, or Petry Sludge resulting from the biological, chemical, or physical-chemical treatment of said wastes, in liquid, paste, or solid form
- drying the said Sludge, Dregs, or Petry Sludge; and
- adding antimicrobial additives;
in which the treated Sludge, Dregs, or Petry Sludge is fully used; and
in which the treated Sludge, Dregs, or Petry Sludge is added to the formulation directly at the time of dyeing, for use in its own production chain or in usage segments to be explored;

2. Process according to Claim 1, **characterized in that** it comprises adding a compound chosen from the selected group of silver nano-molecules, surfactants, wetting agents or mixtures thereof.

3. Process according to Claim 2, **characterized in that** the surfactants and/or wetting agents are tensioactive.

4. Process according to Claim 3, **characterized in that** the tensioactive surfactants and/or wetting agents are selected from the group consisting of cationics, anionics and non-ionics.

5. Process according to Claim 4, **characterized in that** the cationic tensioactive surfactants and/or wetting agents are quaternary ammonium.

6. Process according to Claim 5, **characterized in that** the anionic surfactants and/or wetting agents are sodium dodecanoate or the salts thereof.

7. Process according to Claim 4, **characterized in that** the tensioactive nonionic surfactants and/or wetting agents are charge-free hydrophilic groups linked to the fatty chain or amphoteric - N-alkyl and C-alkyl betaine and sultaine, amino alcohol phosphatidyl, or the salts thereof.

8. Process according to Claim 1, **characterized in that** it was conducted in an acidic medium, with a pH below 5, or in a base medium, with a pH above 8.5.

9. Use of treated Sludge, Dregs, or Petry Sludge, as defined in any one of Claims 1 to 8, **characterized in that** it is like a color equalizer in the fiber, according to the dosage required for each fiber, replacing the dye from 0.01% up to fully at 100%.

10. Use of treated Sludge, Dregs, or Petry Sludge, as defined in any one of Claims 1 to 8, **characterized in that** it is like a color-boosting additive for the textile industry.

11. Use according to Claim 10, **characterized in that** it is a reactive color-boosting dye, with its use reaching up to 100% of the total dye used.

12. Use according to Claims 10 or 11, **characterized in that** it is a direct color-boosting dye, with its use reaching up to 100% of the total dye used.
